(19) Europäisches Patentamt
European Patent Office
Office européen des brevets

(11) **EP 2 871 581 A1**

(12) **EUROPEAN PATENT APPLICATION**
published in accordance with Art. 153(4) EPC

(43) Date of publication:
**13.05.2015 Bulletin 2015/20**

(51) Int Cl.:
**G06F 15/17** (2006.01)   **G06F 17/30** (2006.01)

(21) Application number: **12881055.3**

(22) Date of filing: **09.07.2012**

(86) International application number:
**PCT/JP2012/067422**

(87) International publication number:
**WO 2014/010007 (16.01.2014 Gazette 2014/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Hitachi, Ltd.
Tokyo 100-8280 (JP)**

(72) Inventors:
• **MIYAKOSHI Junichi
Tokyo 100-8280 (JP)**

• **HAMAMOTO Masaki
Tokyo 100-8280 (JP)**
• **ASA Yasuhiro
Tokyo 100-8280 (JP)**

(74) Representative: **MERH-IP
Matias Erny Reichl Hoffmann
Paul-Heyse-Strasse 29
80336 München (DE)**

(54) **INFORMATION PROCESSING SYSTEM AND GRAPH PROCESSING METHOD**

(57)    A problem in a scale-free graph is that, as the size thereof becomes larger, the calculation time becomes longer even when parallel processing is used.

The invention solves this problem, in a parallel computer system that executes a plurality of processes each being assigned a memory space, by placing the information of a first graph vertex and the information of a first graph vertex group connected to the first graph vertex in a first memory space assigned to a first process, placing the information of the first graph vertex and the information of a second graph vertex group connected to the first graph vertex in a second memory space assigned to a second process, and sharing the result of computation concerning the first graph vertex in the first process and the result of computation concerning the first graph vertex in the second process between the first process and the second process.

[FIG. 4]

**Description**

Technical Field

The present invention relates to an information processing system that performs graph processing and a graph processing method.

Background Art

Advance in communication technology such as the Internet and an increase in the recording density due to improvement of storage technology have increased the amount of data used by companies and persons and the analysis of the correspondence (also referred to as a network) of large scale data is becoming important recently. In particular, the correspondence of data generated in the natural world, such as human relationship, is often represented by a graph with scale-free properties, and the analysis of a large graph with scale-free properties is becoming important (PTL 1).

A graph includes vertices and sides that represent the relation between vertices. Generally, graph analysis is mainly the calculation of metrics such as, for example, a graph diameter, centrality, and principal component vector by random walk and most of the calculation of the metrics is performed by information exchange processing (traverse processing) along a side between vertices.

NPL 1 discloses, as a high- speed graph analysis technique, a technique for dividing a graph on a vertex-by-vertex basis and performing parallel processing. PTL 2 discloses a technique for further changing the calculation order of vertices, compressing the graph, and calculating the compressed graph as is, in addition to dividing a graph on a vertex-by-vertex basis and performing parallel processing.

Citation List

Patent Literature

PTL 1: JP-A-2004-318884
PTL 2: U.S. Patent Application Publication No. 2010/0306158

Non Patent Literature

NPL 1: Douglas Gregor, Andrew Lumsdaine, "Lifting sequential graph algorithms for distributed-memory parallel computation", "OOPSLA '05 Proceedings of the 20th annual ACM SIGPLAN conference on Object-oriented programming, systems, languages, and applications" , ACM New York, (the United State), 2005, p.423-437

Summary of Invention

Technical Problem

However, in the techniques disclosed in patent literature 1 and patent literature 2, as a scale-free graph becomes large, the calculation time of its graph analysis takes longer. This problem is caused by presence of a hub vertex with a high degree (the number of sides connected to a vertex).

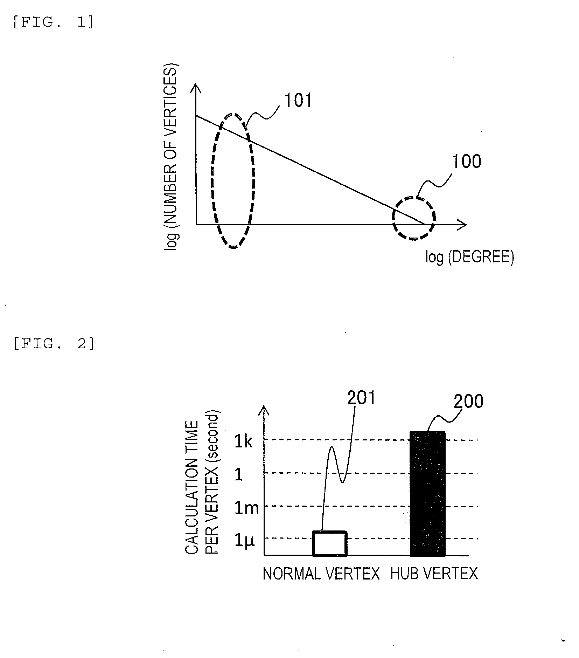

Fig. 1 shows a typical example of the degree distribution of a scale-free graph. The horizontal axis in Fig. 1 represents the logarithm of the number of sides. The vertical axis in Fig. 1 represents the logarithm of the number of vertices. The hub vertices indicated by a set 100 are small in number, but has a high degree. On the other hand, the normal vertices indicated by a set 101 are many in number, but have a low degree. Since traverse processing is information exchange processing along a side between vertices, the degree has a large effect on the calculation time.

Fig. 2 shows an example of the relation between the degree and the calculation time. As shown in Fig. 2, since a hub vertex has a high degree, a calculation time 200 of a hub vertex is longer by several digits than a calculation time 201 of a normal vertex with an average degree. Since the entire calculation time of graph analysis is determined by the calculation time of the vertex with the longest calculation time, the calculation time of a hub vertex degrades the calculation time of the entire graph processing.

On the other hand, since the technique disclosed in patent literature 1 is only division on a vertex-by-vertex basis and the technique disclosed in patent literature 2 is a method of changing the calculation order of vertices to achieve speedup, the problem with the number of sides of hub vertices is not solved and degradation of the calculation time due to hub vertices cannot be prevented.

An object of the invention is to achieve a graph processing method and an information processing system that have excellent parallel scalability.

Solution to Problem

The invention is a parallel computer system that executes a plurality of processes each being assigned a memory space. The parallel computer system solves the above problem by placing the information of a first graph vertex and the information of a first graph vertex group connected to the first graph vertex in a first memory space assigned to a first process, placing the information of the first graph vertex and the information of a second graph vertex group connected to the first graph vertex in a second memory space assigned to a second process, and sharing a result of computation concerning the first graph vertex in the first process and a result of the computation concerning the first graph vertex in the second process between the first process and the second process.

Advantageous Effects of Invention

The invention enables the obtainment of excellent parallel processing scalability.

[Brief Description of Drawings]

[Fig. 1] Fig. 1 shows a typical example of the degree distribution of a scale-free graph.
[Fig. 2] Fig. 2 shows an example of the relation between the degree and calculation time.
[Fig. 3] Fig. 3 shows an example of an input graph.
[Fig. 4] Fig. 4 shows a concept of placing vertices.
[Fig. 5] Fig. 5 shows an example of an information processing system.
[Fig. 6] Fig. 6 shows an example of placing memory spaces.
[Fig. 7] Fig. 7 is a flowchart showing an example of calculation of a principal component vector.
[Fig. 8] Fig. 8 is a flowchart showing an example of calculation of normal vertex processing.
[Fig. 9] Fig. 9 is a flowchart showing an example of calculation of split vertex processing.
[Fig. 10] Fig. 10 is a flowchart showing an example of communication processing.
[Fig. 11] Fig. 11 is a flowchart showing an example of split vertex synchronization processing.
[Fig. 12] Fig. 12 shows an example of placing memory spaces.
[Fig. 13] Fig. 13 shows a communication pattern in split vertex synchronization processing in example 1.
[Fig. 14] Fig. 14 shows a communication pattern in split vertex synchronization processing in example 4.

Description of Embodiments

[Example 1]

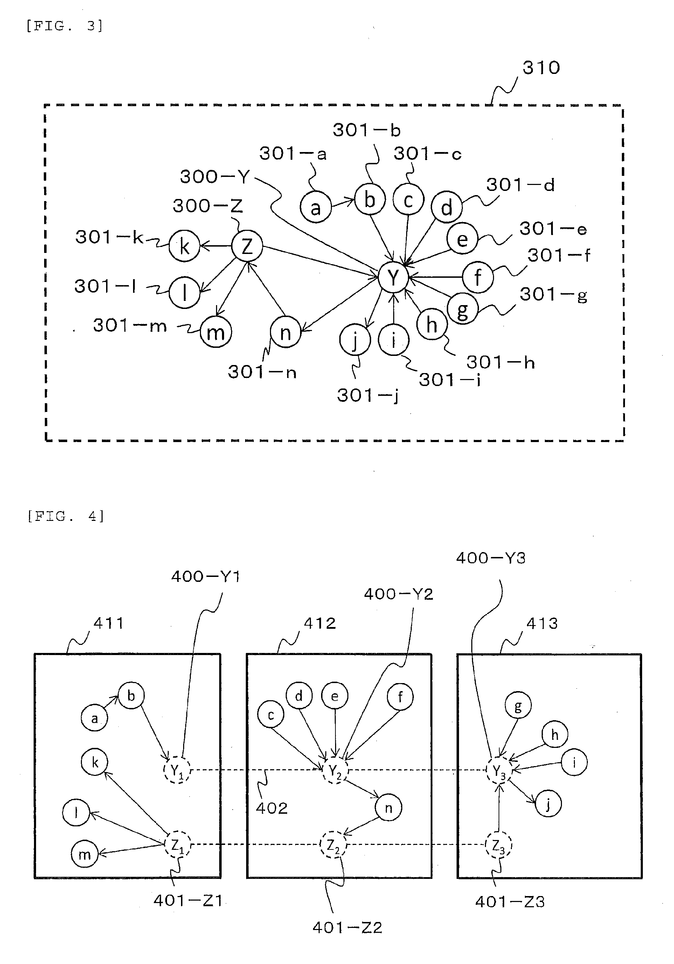

Examples of a graph processing method and an information processing system according to the invention will be described below. Fig. 3 shows a graph 310 as an example of a part of an input graph according to the invention.

In the graph 310, vertices are represented by circles and directed edges are represented by arrows connecting vertices. Of the vertices connected by a directed edge, the vertex at the arrowhead seen from the vertex at the arrow tail is referred to as the "adjoined" vertex. The vertices with a relatively high degree (a degree of five or more in this example) as compared with other vertices are referred to as hub vertices and the other vertices are referred to as normal vertices. In the graph 310 in Fig. 3, hub vertex Y (300-Y) and hub vertex Z (300-Z) are hub vertices and normal vertices a to n (301-a to 301-n) are normal vertices.

Next, the calculation of a principal component vector using random walk will be described as an example of graph analysis processing for the graph 310. Generally, the calculation of a principal component vector using random walk is performed by repeating processing in which the component data held by each vertex is distributed to the adjoined vertices and the vertices receive the distributed component data, calculates the sum, and updates the component data of the vertices. After repeating the update processing a plurality of times, the component data held by the vertices is the desired principal component vector.

At hub vertex Y in the graph 310, hub vertex Y first distributes its component data at time t-1 to normal vertex j and normal vertex n, which are the adjoined vertices. The component data at time t-1 held by hub vertex Y itself is divided by the number (two in this case) of adjoined vertices and then transmitted. The expression used to divide the component data is represented as expression (1). In the expression, D is component data, sendD is component data to be distributed, the superscript is time, and the subscript is the vertex identification information (vertex ID) of a vertex of interest. Next, hub vertex Y receives the component data (sendD) distributed from the adjoined vertices (normal vertices b to i and hub vertex Z) and calculates the sum. The resulting sum is the component data at time t. The computational expression is represented as expression (2).

[Math. 1]

$$\mathrm{SendD}_Y^{t\text{-}1} = \frac{D_Y^{t-1}}{\text{Number of outdgrees of vertex Y}} \quad (1)$$

[Math. 2]

$$D_Y^{t\text{-}1} = \sum\nolimits_{\{b,c,d,e,f,g,h,i,Z\}} \mathrm{SendD}_Y^{t-1} \quad (2)$$

The component data held by each vertex after the above processing is performed a plurality of times on all vertices is the result of calculation of principal component vector using random walk.

Since hub vertex Y has a higher degree and transmits and receives more component data than other normal vertices at this time, the necessary amount of processing is large and the processing time becomes uneven between hub vertex Y and normal vertices, thereby causing reduction in parallel processing scalability.

Therefore, in the information processing system according to the invention, the graph 310 is placed in a plurality of processes as shown in Fig. 4. A hub vertex is divided and placed in a plurality of processes and each of the divided and placed hub vertices is connected to the vertices placed in the corresponding process through sides. The divided and placed hub vertices in the process are referred to as split vertices. Here, a process is a running instance to which a memory space (or storage space) is assigned by the operating system, and a process is an execution unit of a program.

Split vertices and the placement thereof will be described with reference to a vertex placement conceptual diagram in Fig. 4. In the vertex placement conceptual diagram shown in Fig. 4, hub vertex Y and the hub vertex Z are divided and placed in processes 411 to 413. Of the placed split vertices, hub vertex Y is divided into split vertices $Y_1$ (400-Y1), $Y_2$(400-Y2), and $Y_3$ (400-Y3) and the hub vertex Z is divided into split vertex $Z_1$(401-Z1), $Z_2$(401-Z2), and $Z_3$(401-Y3). Each of the split vertices is connected to the other vertices placed in the corresponding process according to the connection information of the graph 310. Dashed lines (such as a dashed line 402) between the split vertices in the vertex placement conceptual diagram in Fig. 4 indicate that the vertices are derived from a single vertex.

The calculation expressions for the component data of hub vertex Y in this case are represented as expressions (3), (4), (5), and (6).

[Math. 3]

$$\mathrm{tmpD}_{Y1}^t = \sum\nolimits_{\{b\}} \mathrm{SendD}_i^{t-1} \quad (3)$$

[Math. 4]

$$\mathrm{tmpD}_{Y2}^t = \sum\nolimits_{\{c,d,e,f\}} \mathrm{SendD}_i^{t-1} \quad (4)$$

[Math. 5]

$$\mathrm{tmpD}_{Y3}^t = \sum\nolimits_{\{g,h,i,z\}} \mathrm{SendD}_i^{t-1} \quad (5)$$

[Math. 6]

$$D_Y^t = \sum\nolimits_{\{Y1,Y2,Y3\}} \mathrm{SendD}_i^t \quad (6)$$

The calculation of sendD is performed based on expression (1). Based on expressions (3) to (5), the split vertices $Y_1$(400-Y1), $Y_2$(400-Y2), and $Y_3$(400-Y3) receive the component data (sendD) from the adjoining vertices placed in the corresponding processes and temporary component data (tmpD) is calculated for each of the split vertices. Then, based on expression (6), the temporary component data obtained by the split vertices derived from the same vertex is exchanged among the split vertices and the component data of hub vertex Y at time t is calculated for each of the split vertices.

The calculation of normal vertices is performed according to expressions (1) and (2). Accordingly, the calculation of sendD concerning hub vertices and normal vertices is performed according to expression (1). The calculation of the component data of normal vertices is performed according to expression (2) and the calculation of the component data of hub vertices is performed according to expressions (3) to (6).

In this way, the calculation of the component data of hub vertices can be distributed to a plurality of processes, thereby solving the above problem.

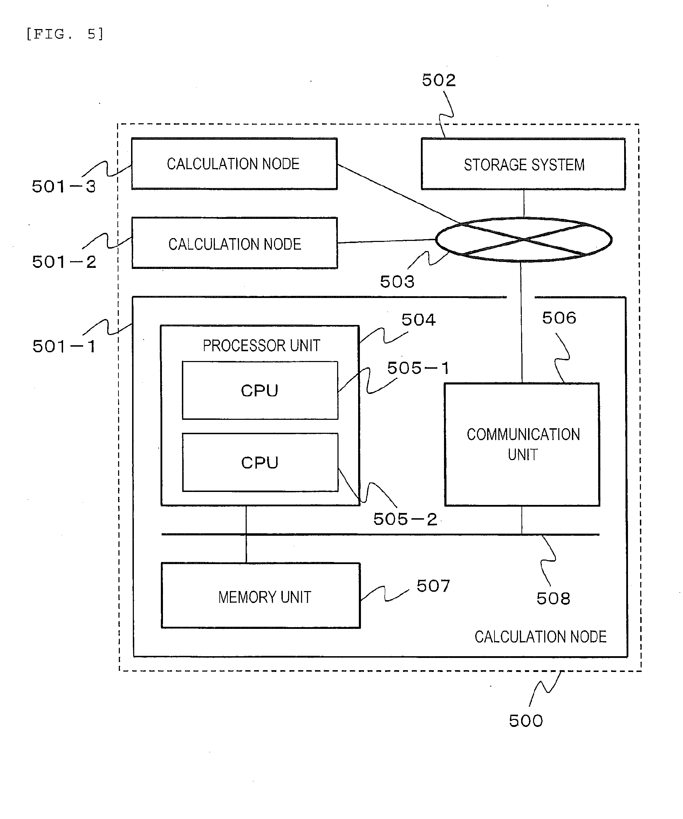

A calculation procedure with a computer according to example 1 will be described in detail below. Fig. 5 shows an exemplary information processing system 500 that performs graph processing according to example 1. The information processing system 500 includes one or more calculation nodes 501-1 to 501-3, a storage system 502, and a network system 503 connecting the calculation nodes 501-1 to 501-3, the storage system 502, and so on. Each of the calculation nodes 501-1 to 501-3 includes a processor unit 504 having one or more central processing units (CPU) 505-1 and 505-2, a memory unit 507, a communication unit 506, and a bus 508 interconnecting these units. The calculation nodes 501 to 3 are server devices, for example. Each process of the above graph processing is computed by one or more CPUs and the memory space corresponding to each process is reserved in one or more memory units. One CPU may process a plurality of processes or one memory unit may hold the memory spaces for a plurality of processes. Computing units such as FPGAs and GPUs may be used instead of the CPUs. The processor units 504 may access units including a memory unit in another calculation node through the communication unit 506. Similarly, the processor units 504 may access information stored in the storage system 502 through the communication unit 506.

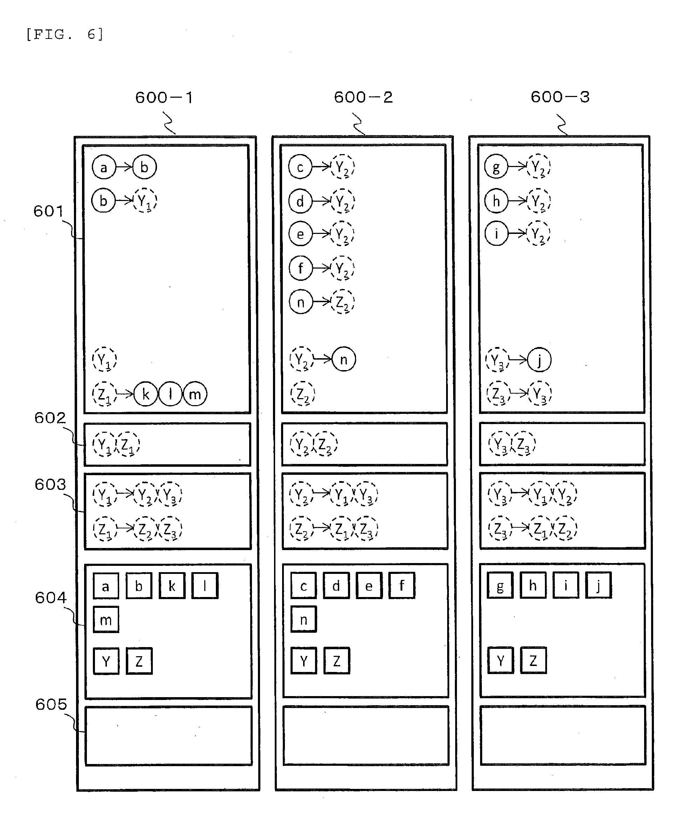

Fig. 6 shows processing of the processes and the memory spaces (the memory space 600-1 corresponding to the process 411, the memory space 600-2 corresponding to the process 412, the memory space 600-3 corresponding to the process 413, and information stored in these memory spaces (vertex connection information 601, split vertex lists 602, split vertex connection information 603, component data lists 604, and transmission queues 605)) assigned to the processes in the vertex placement shown in Fig. 4. In Fig. 6, circles shown in the frames of the vertex connection information 601, the split vertex lists 602, and the split vertex connection information 603 indicate the stored vertices, characters in the circles indicate vertex IDs, and arrows indicate the information of adjoining relation (that is, adjoining from arrow tails to arrowheads). Rectangles shown in the component data lists 604 indicate component data (D) corresponding to vertex IDs.

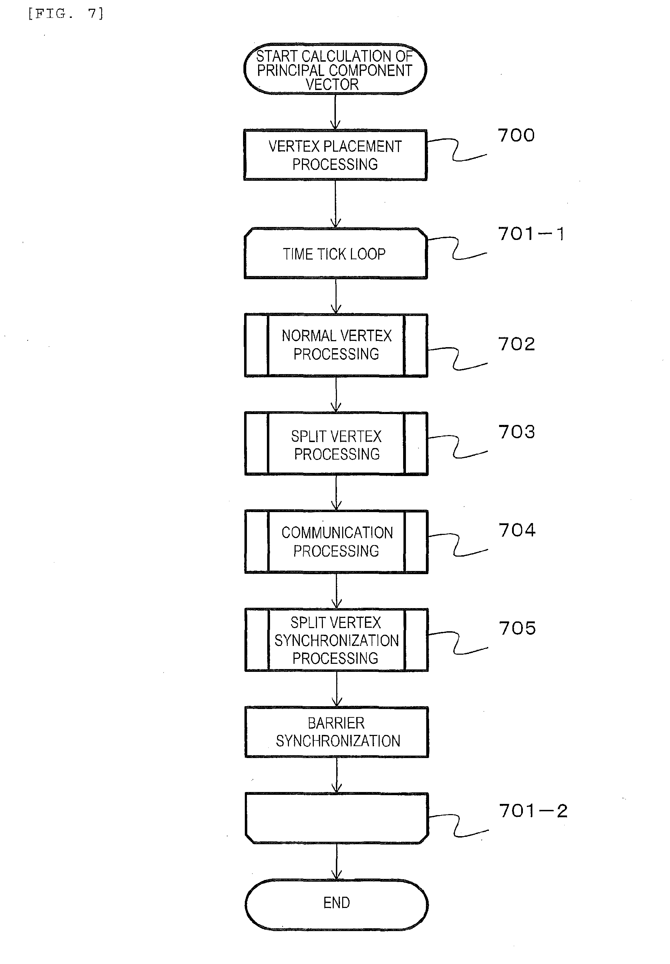

The calculation procedure for the component data of a principal component vector is shown in Fig. 7. First, vertex placement processing is performed in step 700. In the vertex placement processing, each process accesses an input graph stored in the storage system 502 and obtains the vertex connection information of vertices placed in the process. Each process can know the vertices placed in the process by comparing its process identification information (process ID) with the vertex ID. This can be achieved by placing, in a process with a process ID of 1, the vertex with a remainder of 1 when a numerized vertex ID is divided by the number of calculation nodes, placing the vertex with a remainder of 2 in a process with a process ID of 2, and placing the vertex with a remainder of 3 in a process with a process ID of 3. For example, when the number of processes is 16, the vertex IDs of vertices placed in a process with a process ID of 1 are {1, 17, 33, ...}. Each process calculates the degree of each vertex based on the vertex connection information obtained by the process, compares the degree with a preset hub degree threshold, determines the vertex with a degree lower than the hub degree threshold to be a normal vertex, and places the vertex connection information in the memory space corresponding to the process. On the other hand, each process determines the vertex with a degree higher than the hub degree threshold to be a hub vertex and places the split vertex list 602 and the split vertex connection information 603 in the memory space of the process in addition to the vertex connection information 601. Accordingly, for split vertices, information of the same split vertex and information of a vertex group including one or more vertices connected to the split vertex are placed in the memory spaces of at least two processes. As described above, the information processing system 500 has means that, for split vertices, places the information of the same split vertex and the information of a vertex group including one or more vertices connected to the split vertex in the memory spaces of at least two processes.

Next to step 700, there is time tick loop processing repeated in the steps from step 701-1 to step 701-2 to perform a principal component vector calculation a plurality of times. This loop includes four pieces of main processing:

normal vertex processing 702, split vertex processing 703, communication processing 704, and split vertex synchronization processing 705. The processing will be described in detail below.

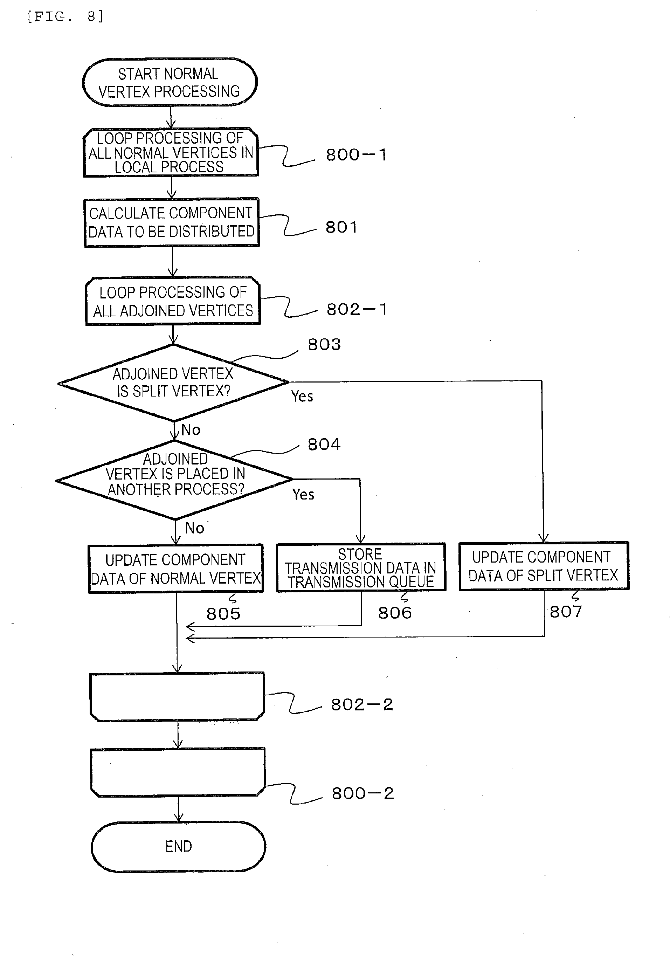

The normal vertex processing 702 calculates component data for a normal vertex. Fig. 8 describes a calculation procedure for the normal vertex processing 702. In this procedure, the memory space 600-1 shown in Fig. 6 corresponding to the process 411 is taken as an example. In the normal vertex processing, the loop processing from 800-1 to 800-2 is performed on all normal vertices placed in a local process. In the example shown in Fig. 6, vertex a and vertex b stored in the vertex connection information 601 are to be processed because these vertices are normal vertices and undergo the processing from 800-1 to 800-2. Then, in step 801, the component data of these normal vertices is obtained from the component data list 604, the adjoining count (the adjoining count is 1 since vertex b adjoins only vertex Y) is obtained from the vertex connection information 601, and the component data (sendD) to be distributed is calculated (corresponding to expression (1)). Then, process 411 obtains the information of the vertices adjoined by these normal vertices from the vertex connection information 601 and performs the loop processing from 802-1 to 802-2 on each of the vertices adjoined by these normal vertices. For example, since the above vertex b adjoins vertex Y, the processing from 802-1 to 802-2 is performed on vertex Y.

Then, process 411 decides in step 803 whether each of the adjoined vertices is a split vertex or not with reference to the split vertex list 602. Since the calculation expression applied depends on whether the adjoined vertex is a split vertex as describe above, the processing branches in step 803. When the adjoined vertex is a split vertex as a result of the decision, the component data, calculated in step 801, that is to be distributed is added to the temporary component data of the adjoined vertex in step 807. For example, sendD of vertex b is added to the temporary component data (tmpD) of split vertex $Y_1$. When the adjoined vertex is a split vertex, expressions (3) to (5) are applicable.

In contrast, when the adjoined vertex is not a split vertex as a result of the decision, the process 411 decides in step 804 whether the adjoined vertex is placed in another process. The process 411 decides whether the adjoined vertex is placed in a process other than the process 411. Since each process can know the vertices placed in the process by comparing its process identification information (process ID) with vertex IDs as described above, the process makes a decision using the vertex ID of the adjoined vertex. For example, when the process ID of the local process is 1, the vertex ID of the adjoined vertex is 20, and the number of processes is 16, then the remainder (= 4) obtained by dividing the vertex ID (= 20) by the number (= 16) of processes indicates the process ID of the process in which the adjoined vertex is placed. Since the process ID of the local process is 1, the adjoined vertex is decided to be placed in another process. When the adjoined vertex is placed in a process other than the process 411 as a result of the decision, the component data, which is information to be distributed, is to be transmitted to another process in which the adjoined vertex is placed and is stored in a transmission queue 605 (step 806). The information stored in the transmission queue 605 includes the vertex ID of a transmission destination vertex and the vertex ID of a transmission source vertex in addition to the component data. When the adjoined vertex is placed in the process 411, since component data (D) of the distribution destination is present in the component data list 604 of the process 411, the component data (sendD) is added to the component data (D) of the distribution destination (step 805). When the adjoined vertex is a normal vertex, the processing is performed according to expression (2). When a decision is made as to whether a certain vertex is a split vertex or normal vertex in step 803, information in the split vertex list 602 is used. Since the split vertex list 602 includes the vertex IDs of split vertices, each process determines the adjoined vertex is a split vertex or normal vertex with reference to the split vertex list 602.

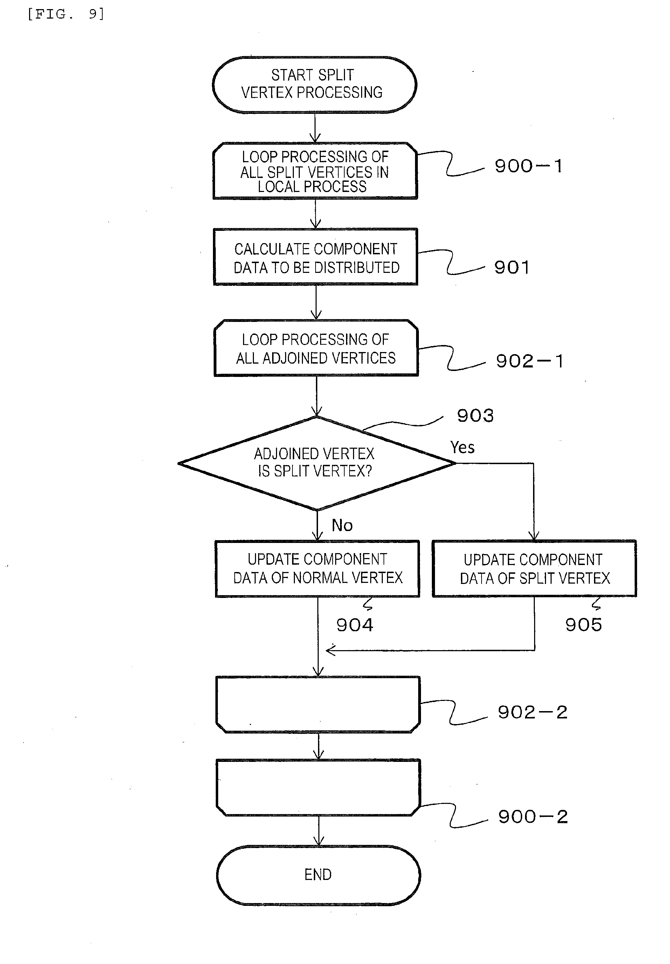

Next, the split vertex processing 703 will be described with reference to the flowchart in Fig. 9. The split vertex processing 703 performs calculation for a split vertex, but step 900-1, step 901, and step 902-1 are similar to step 800-1, step 801, and step 802-1 of the normal vertex processing 702, respectively. That is, the loop processing from step 900-1 to 900-2 is performed on the split vertices placed in the process 411 and, in step 901, the component data included in each of the split vertices is read from the component data list 604 and is divided by the number of vertices adjoined by the hub vertex read from the vertex connection information. In the loop processing from step 902-1 to 902-2, the processing is performed on the vertices adjoined by the split vertex.

Then, in step 903, a decision is made as to whether the vertex adjoined by the placed split vertex is a split vertex. When the vertex is a split vertex as a result of the decision, the component data (sendD), calculated in step 901, that is to be distributed is added to the temporary component data (tmpD) of the adjoined vertex as in step 807 (step 905). When the vertex is not a split vertex, the component data (sendD) to be distributed is added to the component data (D) of the distribution destination as in step 805. For example, in an example of the memory space 600-1 corresponding to the process 411, processing for adding component data (sendD) to be distributed to component data (D) of the distribution destination is performed on normal vertices k, 1, and m adjoined by split vertex $z_1$. The reason why the split vertex processing 703 does not include the processing equivalent to step 806 is because example 1 defines that each split vertex adjoins a vertex placed in the process in which the split vertex is placed. This makes the amount of communication between processes smaller than in the case where each split vertex is defined to adjoin a vertex placed in a process other than the process in which each split vertex is placed, thereby increasing the speed of graph processing.

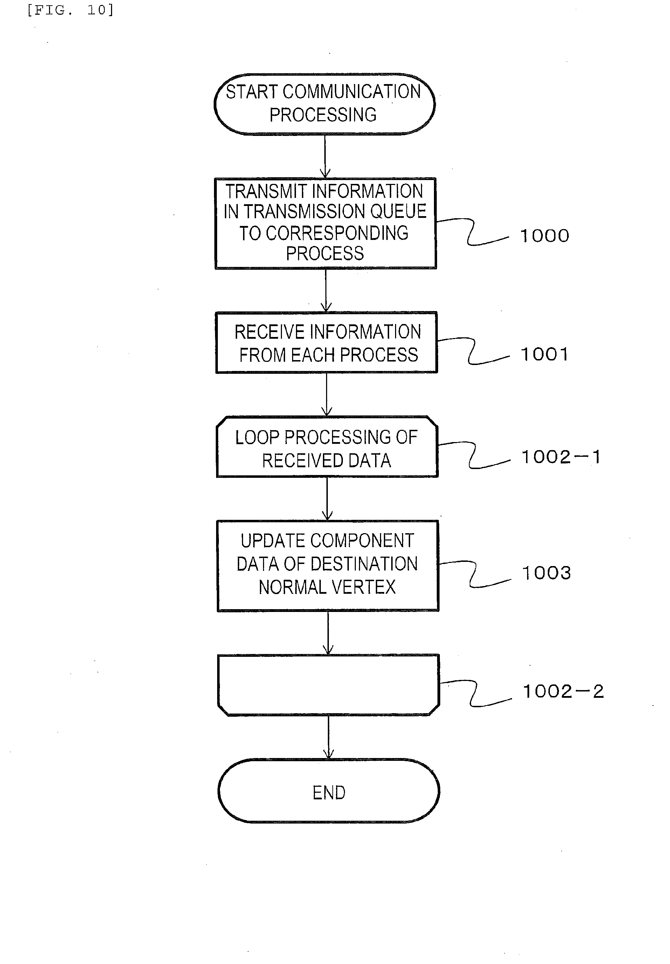

Then, in communication processing 704, the information stored in transmission queue 605 is communicated between processes. Fig. 10 shows a flowchart of the communication processing 704.

First, each process transmits the information (transmission destination vertex ID, transmission source vertex ID, and component data) stored in the transmission queue 605 to the corresponding process according to the vertex ID of the transmission destination vertex stored in the transmission queue 605 (step 1000). Then, each process receives the transmitted information (step 1001). Then, each process performs the loop processing (from step 1002-1 to step 1002-2) on each piece of the received data. In the loop, for each piece of the data, the received component data (sendD) is added to the component data (D) of the corresponding normal vertex according to the vertex ID of the transmission destination vertex (step 1003). The processing in step 1003 is performed according to expression (2).

Next, in the split vertex synchronization processing 705, the component data of the split vertex is calculated. That is, the processing equivalent to expression (6) is performed. In step 1100 and step 1101, each process transmits the temporary component data (tmpD) present in each process to another process according to the split vertex connection information 603 and receives temporary component data (tmpD) transmitted from another process. This allows the result of calculation of the split vertex performed by each process to be shared between the processes. As described above, the information processing system 500 has means for sharing the results of computation of the split vertices performed by the processes. The information communicated in step 1100 and step 1101 includes the vertex IDs and temporary component data of transmission destination split vertices. The split vertex connection information 603 indicates how a single vertex has been divided into a plurality of vertices. In the example in Fig. 6, the split vertex connection information 603 of the memory space 600-1 corresponding to the process 411 includes the information of split vertices $Y_2$ and $Y_3$ obtained by dividing hub vertex Y and the information of split vertices $Z_2$ and $Z_3$ obtained by dividing the hub vertex Z. Then, each process performs the loop processing (from step 1102-1 to step 1102-2) of each piece of the received data. In step 1103 in the loop processing, for each piece of the received data, the received temporary component data is added to the corresponding component data in the component data list 604 according to the vertex ID of the transmission destination split vertex.

In the above four pieces of processing, the component data of normal vertices and split vertices can be calculated. In addition, a hub vertex can be divided and placed into processes to perform parallel processing. This achieves excellent parallel scalability.

[Example 2]

Example 2 describes an exemplary processing method when split vertices corresponding to a single hub vertex are placed in all processes that perform graph processing. The graph processing method according to example 2 has the effect of reducing the amount of data of the split vertex connection information 603.

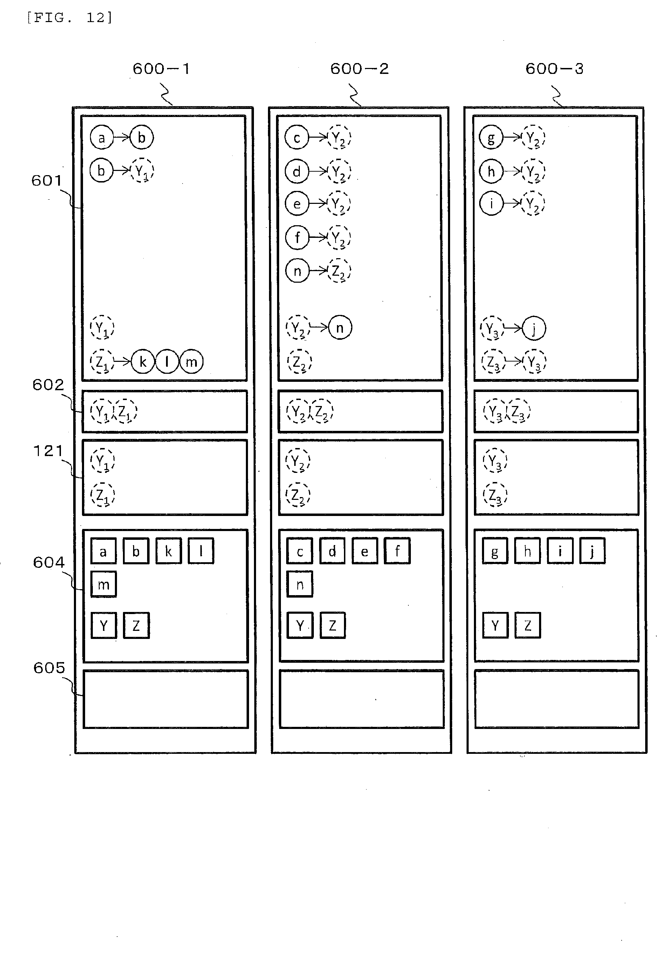

Fig. 12 shows the conceptual view of memory spaces assigned to the processes in example 2. This view corresponds to Fig. 6 in example 1.

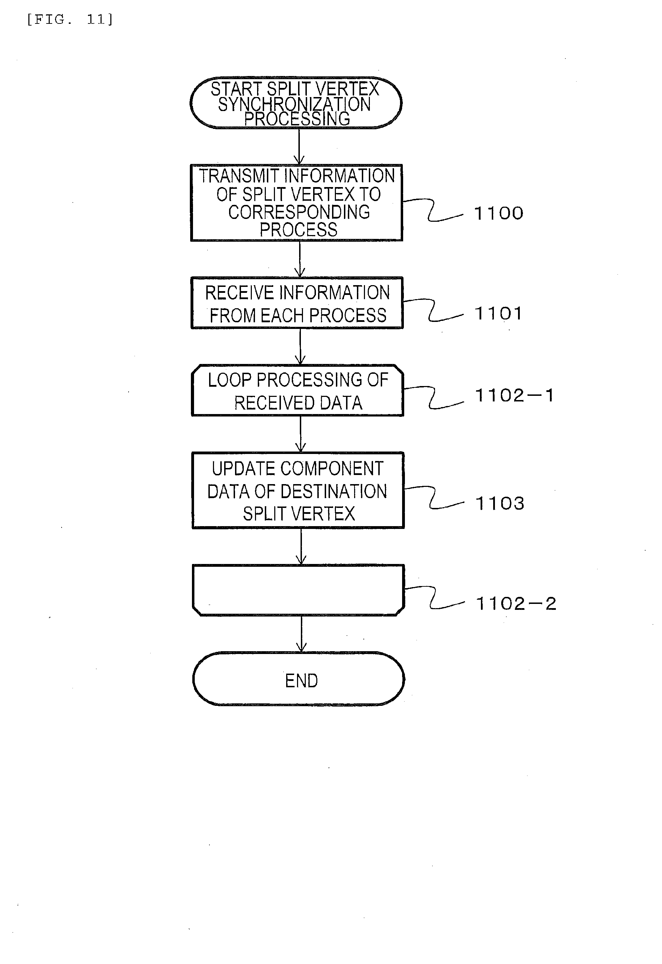

Since the split vertices corresponding to a single hub vertex are placed in all processes in example 2, the connection destination processes in the split vertex synchronization processing 705 are always all processes. Accordingly, it is not necessary to reference the split vertex connection information 603, which is referenced in the processing (step 1100 in Fig. 11) for transmitting the information of split vertices in the split vertex synchronization processing 705 in example 1 to the corresponding process. This eliminates the need for holding the information of connection destinations, as shown in the split vertex connection information 121 in Fig. 12 and a graph processing method according to example 2 has the effect of reducing the amount of data.

[Example 3]

In example 3, which is a modification of example 1, a vertex ID includes the identifier of a split vertex to distinguish between a normal vertex and a split vertex. When a vertex ID is 64 bits in length, the 64th bit (that is, the most significant bit) is assigned to the identifier of a split vertex, which is set to 1 for a split vertex or 0 for another vertex. In this case, the vertex ID has a length of 63 bits (from bit 0 to bit 62). Accordingly, the most significant bit of a vertex ID only needs to be checked to distinguish between a normal vertex and a split vertex.

[Example 4]

Example 4 describes an exemplary processing method that achieves communication of temporary component data between processes using a daisy chain instead of all-processes-to-all-processes correspondence in the split vertex synchronization processing. The graph processing method according to example 4 has the effect of reducing the number of communications through inter-process transmission and reception (equivalent to step 1100 and step 1101) of temporary component data in the split vertex synchronization processing 705.

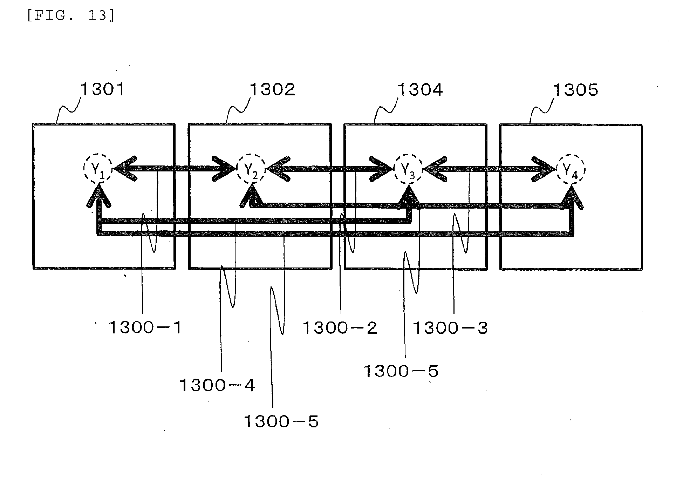

Fig. 13 shows the communication pattern of the split vertex synchronization processing 703 of the graph processing method according to example 1. Fig. 13 shows an example in which hub vertex Y is represented as split vertices $Y_1$ to $Y_4$ and these vertices are placed in four processes 1301 to 1304, respectively. In Fig. 13, communication of the split vertex synchronization processing 703 is performed a total of 12 times: communication from split vertex $Y_1$ to split vertex $Y_2$ and from split vertex $Y_2$ to split vertex $Y_1$ (communication 1300-1), communication from split vertex $Y_2$ to split vertex $Y_3$ and from split vertex $Y_3$ to split vertex $Y_2$ (communication 1300-2), communication from split vertex $Y_3$ to split vertex $Y_4$ and from split vertex $Y_4$ to split vertex $Y_3$ (communication 1300-3), communication from split vertex $Y_1$ to split vertex $Y_3$ and from split vertex $Y_3$ to split vertex $Y_1$ (communication 1300-4), communication from split vertex $Y_2$ to split vertex $Y_4$ and from split vertex $Y_4$ to split vertex $Y_2$ (communication 1300-5), and communication from split vertex $Y_1$ to split vertex $Y_4$ and from split vertex $Y_4$ to split vertex $Y_1$ (communication 1300-6).

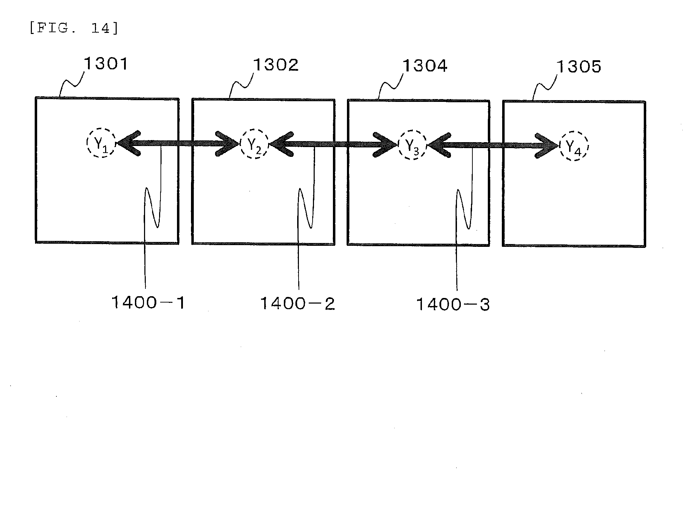

On the other hand, Fig. 14 shows the communication pattern of the split vertex synchronization processing according to example 4. In Fig. 14, the number of communications is reduced to a total of six times: communication from split vertex $Y_1$ to split vertex $Y_2$ and from split vertex $Y_2$ to split vertex $Y_1$ (communication 1400-1), communication from split vertex $Y_2$ to split vertex $Y_3$ and from split vertex $Y_3$ to split vertex $Y_2$ (communication 1400-2), and communication from split vertex $Y_3$ to split vertex $Y_4$ and from split vertex $Y_4$ to split vertex $Y_3$ (communication 1400-3). At this time, upon receiving temporary component data, each process determines, for each split vertex, whether the temporary component data of a split vertex owned by the process has been added to the received temporary component data. If the temporary component data has not been added, then the temporary component data is added and the temporary component data to which the temporary component data has been added is transmitted to another process. If the temporary component data has been added, the temporary component data is stored as component data in the component data list 604 and the component data is transmitted to another process. In Fig. 14, for example, the temporary component data is transmitted from split vertex $Y_1$ to split vertex $Y_2$, and split vertex $Y_2$ adds the received temporary component data to the temporary component data of split vertex $Y_2$ and transmits the result to split vertex $Y_3$. Then, the temporary component data is transmitted from split vertex $Y_3$ to split vertex $Y_4$ similarly. Since split vertex $Y_4$ is the last split vertex, the temporary component data is stored as component data in the component data list 604 of the process 1304. Then, the component data is transmitted from split vertex $Y_4$ to split vertex $Y_3$. Since split vertex $Y_3$ has already added the temporary component data, split vertex $Y_3$ stores the received component data in the component data list 604 of a local process 1303. Similarly, the component data is transmitted from split vertex $Y_3$ to split vertex $Y_2$ and from split vertex $Y_2$ to split vertex $Y_1$. Since the component data passes through all processes as in a daisy chain, the split vertex synchronization processing can be performed. As described above, example 4 has the effect of reducing the number of communications.

Reference Signs List

411 to 413: processes, 500: information processing system, 501-1 to 501-3 : calculation nodes, 502: storage system, 503: network system, 504: processor unit, 505-1 and 505-2: CPUs, 506: communication unit, 507: memory unit, 508: bus, 600-1 to 600-3: memory spaces, 601: vertex connection information, 602: split vertex list, 603: split vertex connection information, 604: component data, 605: transmission queue

**Claims**

1. A graph processing method in an information processing system executing a plurality of processes each being assigned a memory space, the graph processing comprising:

    placing information of a first graph vertex and information of a first graph vertex group connected to the first graph vertex in a first memory space assigned to a first process; and
    placing the information of the first graph vertex and information of a second graph vertex group connected to the first graph vertex in a second memory space assigned to a second process,
    wherein a result of computation concerning the first graph vertex in the first process and a result of computation concerning the first graph vertex in the second process are shared between the first process and the second process.

2. The graph processing method according to claim 1,
    wherein the first process performs the computation concerning the first graph vertex based on the information of the first graph vertex group and
    the second process performs computation concerning the first graph vertex based on the information of the second graph vertex group.

**3.** The graph processing method according to claim 1,
wherein the information of the first graph vertex is placed in all of the plurality of processes.

**4.** The graph processing method according to claim 1,
wherein the first graph vertex is a hub vertex.

**5.** The graph processing method according to claim 4,
wherein the first graph vertex group includes a normal vertex.

**6.** The graph processing method according to claim 1,
wherein the graph processing is calculation of a principal component vector using random walk.

**7.** An information processing system executing a plurality of processes each being assigned a memory space, the information processing system comprising:

means for placing information of a first graph vertex and information of a first graph vertex group connected to the first graph vertex in a first memory space assigned to a first process and placing the information of the first graph vertex and information of a second graph vertex group connected to the first graph vertex in a second memory space assigned to a second process; and
means for sharing a result of computation concerning the first graph vertex in the first process and a result of computation concerning the first graph vertex in the second process between the first process and the second process.

**8.** The information processing system according to claim 7,
wherein the first process performs the computation concerning the first graph vertex based on the information of the first graph vertex group and
the second process performs the computation concerning the first graph vertex based on the information of the second graph vertex group.

**9.** The information processing system according to claim 7,
wherein the first graph vertex is a hub vertex.

**10.** The information processing system according to claim 9,
wherein the first graph vertex group includes a normal vertex.

[FIG. 1]

[FIG. 2]

[FIG. 3]

[FIG. 4]

[FIG. 5]

502
501-3 CALCULATION NODE
STORAGE SYSTEM
501-2 CALCULATION NODE
503
501-1
504
PROCESSOR UNIT
505-1
CPU
506
CPU
COMMUNICATION UNIT
505-2
MEMORY UNIT 507
508
CALCULATION NODE
500

[FIG. 6]

[FIG. 7]

```
        ┌─────────────────────────┐
        │  START CALCULATION OF   │
        │  PRINCIPAL COMPONENT    │
        │        VECTOR           │
        └───────────┬─────────────┘
                    │
        ┌───────────▼─────────────┐
        │   VERTEX PLACEMENT      │       700
        │      PROCESSING         │
        └───────────┬─────────────┘
                    │
        ┌───────────▼─────────────┐
        │     TIME TICK LOOP      │       701-1
        └───────────┬─────────────┘
                    │
        ┌─┬─────────▼─────────┬───┐
        │ │   NORMAL VERTEX   │   │       702
        │ │    PROCESSING     │   │
        └─┴─────────┬─────────┴───┘
                    │
        ┌─┬─────────▼─────────┬───┐
        │ │    SPLIT VERTEX   │   │       703
        │ │     PROCESSING    │   │
        └─┴─────────┬─────────┴───┘
                    │
        ┌─┬─────────▼─────────┬───┐
        │ │   COMMUNICATION   │   │       704
        │ │     PROCESSING    │   │
        └─┴─────────┬─────────┴───┘
                    │
        ┌─┬─────────▼─────────┬───┐
        │ │   SPLIT VERTEX    │   │       705
        │ │  SYNCHRONIZATION  │   │
        │ │    PROCESSING     │   │
        └─┴─────────┬─────────┴───┘
                    │
        ┌───────────▼─────────────┐
        │        BARRIER          │
        │    SYNCHRONIZATION      │
        └───────────┬─────────────┘
                    │
        ┌───────────▼─────────────┐
        │                         │       701-2
        └───────────┬─────────────┘
                    │
        ┌───────────▼─────────────┐
        │          END            │
        └─────────────────────────┘
```

[FIG. 8]

START NORMAL
VERTEX PROCESSING

LOOP PROCESSING OF
ALL NORMAL VERTICES IN
LOCAL PROCESS — 800−1

CALCULATE COMPONENT
DATA TO BE DISTRIBUTED — 801

LOOP PROCESSING OF
ALL ADJOINED VERTICES — 802−1

803

ADJOINED VERTEX
IS SPLIT VERTEX?　Yes

No

804

ADJOINED
VERTEX IS PLACED IN
ANOTHER PROCESS?　Yes

No

UPDATE COMPONENT
DATA OF NORMAL VERTEX

STORE
TRANSMISSION DATA IN
TRANSMISSION QUEUE

UPDATE COMPONENT
DATA OF SPLIT VERTEX

805　　　　806　　　　807

802−2

800−2

END

[FIG. 9]

```
        ┌─────────────────────┐
        │    START SPLIT      │
        │  VERTEX PROCESSING  │
        └──────────┬──────────┘
                   │
                   ▼
        ┌─────────────────────┐
        │ LOOP PROCESSING OF  │         900-1
        │ ALL SPLIT VERTICES IN│
        │   LOCAL PROCESS     │
        └──────────┬──────────┘
                   │
                   ▼
        ┌─────────────────────┐
        │ CALCULATE COMPONENT │         901
        │ DATA TO BE DISTRIBUTED│
        └──────────┬──────────┘
                   │
                   ▼
        ┌─────────────────────┐
        │ LOOP PROCESSING OF  │         902-1
        │ ALL ADJOINED VERTICES│
        └──────────┬──────────┘
                   │
                   ▼               903
              ╱─────────────╲
             ╱ ADJOINED VERTEX╲   Yes
            ╱  IS SPLIT VERTEX? ╲─────────────┐
             ╲                 ╱               │
              ╲───────┬───────╱                │
                  No  │                        │
                      ▼                        ▼
        ┌─────────────────────┐   ┌─────────────────────┐
        │ UPDATE COMPONENT    │   │ UPDATE COMPONENT    │
        │ DATA OF NORMAL VERTEX│  │ DATA OF SPLIT VERTEX│
        └──────────┬──────────┘   └──────────┬──────────┘
                904 │                     905 │
                    │◄────────────────────────┘
                    ▼
        ┌─────────────────────┐
        │                     │         902-2
        └──────────┬──────────┘
                   │
                   ▼
        ┌─────────────────────┐
        │                     │         900-2
        └──────────┬──────────┘
                   │
                   ▼
        ┌─────────────────────┐
        │        END          │
        └─────────────────────┘
```

[FIG. 10]

```
        ┌─────────────────────┐
        │ START COMMUNICATION │
        │     PROCESSING      │
        └──────────┬──────────┘
                   │
        ┌──────────▼──────────┐
        │ TRANSMIT INFORMATION│
        │ IN TRANSMISSION QUEUE│ ～ 1000
        │ TO CORRESPONDING    │
        │     PROCESS         │
        └──────────┬──────────┘
                   │
        ┌──────────▼──────────┐
        │ RECEIVE INFORMATION │ ～ 1001
        │  FROM EACH PROCESS  │
        └──────────┬──────────┘
                   │
        ┌──────────▼──────────┐
        │ LOOP PROCESSING OF  │ ～ 1002-1
        │   RECEIVED DATA     │
        └──────────┬──────────┘
                   │
        ┌──────────▼──────────┐
        │ UPDATE COMPONENT    │
        │ DATA OF DESTINATION │ ～ 1003
        │   NORMAL VERTEX     │
        └──────────┬──────────┘
                   │
        ┌──────────▼──────────┐
        │                     │ ～ 1002-2
        └──────────┬──────────┘
                   │
        ┌──────────▼──────────┐
        │        END          │
        └─────────────────────┘
```

[FIG. 11]

```
          ┌─────────────────────┐
         (  START SPLIT VERTEX   )
         (   SYNCHRONIZATION     )
         (     PROCESSING        )
          └─────────────────────┘
                    │
                    ▼
     ┌───────────────────────────┐
     │  TRANSMIT INFORMATION     │
     │   OF SPLIT VERTEX TO      │── 1100
     │    CORRESPONDING          │
     │      PROCESS              │
     └───────────────────────────┘
                    │
                    ▼
     ┌───────────────────────────┐
     │   RECEIVE INFORMATION     │── 1101
     │    FROM EACH PROCESS      │
     └───────────────────────────┘
                    │
                    ▼
     ┌───────────────────────────┐
     │  LOOP PROCESSING OF       │── 1102-1
     │   RECEIVED DATA           │
     └───────────────────────────┘
                    │
                    ▼
     ┌───────────────────────────┐
     │  UPDATE COMPONENT         │
     │  DATA OF DESTINATION      │── 1103
     │    SPLIT VERTEX           │
     └───────────────────────────┘
                    │
                    ▼
     ┌───────────────────────────┐
     │                           │── 1102-2
     └───────────────────────────┘
                    │
                    ▼
          ┌─────────────────────┐
         (        END           )
          └─────────────────────┘
```

[FIG. 12]

[FIG. 13]

[FIG. 14]

## INTERNATIONAL SEARCH REPORT

| International application No. |
| --- |
| PCT/JP2012/067422 |

**A. CLASSIFICATION OF SUBJECT MATTER**
*G06F15/17*(2006.01)i, *G06F17/30*(2006.01)i

According to International Patent Classification (IPC) or to both national classification and IPC

**B. FIELDS SEARCHED**

Minimum documentation searched (classification system followed by classification symbols)
G06F15/17, G06F17/30

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | Rie SAKAI et al., "Query Graph Pattern Optimization for Efficient Discovery of Implicit Information within Linked Data", IPSJ Journal, 15 December 2010 (15.12.2010), vol.51, no.12, pages 2298 to 2309 | 1-5,7-10<br>6 |
| X<br>Y | Tatsuo KUMANO et al., "A Data Structure for Geographic Region Data Using a Region Adjacency Graph", The Transactions of the Institute of Electronics, Information and Communication Engineers (J90-D), no.2, 01 February 2007 (01.02.2007), vol.J90-D, pages 586 to 591 | 1-5,7-10<br>6 |

☒ Further documents are listed in the continuation of Box C.　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19 October, 2012 (19.10.12) | Date of mailing of the international search report<br>30 October, 2012 (30.10.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/067422

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | Takayuki YAMAMOTO et al., "An Information Search Method Based on Management Area Segmentation with Multiple Mobile Agents in Unstructured Peer-to-Peer Networks", IEICE Technical Report, vol.111, no.232, 06 October 2011 (06.10.2011), vol.111, pages 39 to 44 | 1-5,7-10<br>6 |
| Y | Ryohei SAITO et al., "A Working Pattern Extraction Method From Low Level PC Usage Logs", IEICE Technical Report, vol.111, no.310, 14 November 2011 (14.11.2011), vol.111, pages 13 to 18 | 6 |
| Y | Yosuke KIMURA et al., "Kyori Gazo kara no Shisei Hendo ni Robust na Jinbutsu Kenshutsu to Tsuiseki", ITE Technical Report, vol.35, no.33, 22 August 2011 (22.08.2011), vol.35, pages 5 to 8 | 6 |
| A | JP 2009-258794 A  (Fujitsu Ltd.), 05 November 2009 (05.11.2009), paragraphs [0025] to [0034], [0078] to [0081]; fig. 1 to 3, 18 to 20 & US 2009/0259652 A1 | 1-10 |
| A | JP 2011-90352 A  (Yahoo Japan Corp.), 06 May 2011 (06.05.2011), paragraph [0046]; fig. 2 (Family: none) | 1-10 |
| A | JP 63-118877 A  (Hitachi, Ltd.), 23 May 1988 (23.05.1988), page 3, upper right column, line 15 to lower right column, line 3; fig. 3 (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004318884 A

- US 20100306158 A

### Non-patent literature cited in the description

- Lifting sequential graph algorithms for distributed-memory parallel computation. **DOUGLAS GREGOR ; ANDREW LUMSDAINE.** OOPSLA '05 Proceedings of the 20th annual ACM SIGPLAN conference on Object-oriented programming, systems, languages, and applications. ACM, 2005, 423-437